# EUROPÄISCHE PATENTANMELDUNG

(11) **EP 2 072 547 A1**
(43) Veröffentlichungstag der Anmeldung: **24.06.2009**
(21) Anmeldenummer: 07024756.4
(22) Anmeldetag: 20.12.2007
(51) Int. Cl.: C08G 8/38, C08G 8/28, C08C 19/30, C08C 19/36

(54) **Modifizierte Phenolharze**

(71) Anmelder: Nanoresins AG, 21502 Geesthacht (DE)
(72) Erfinder: Sprenger, Stephan, 22113 Oststeinbek (DE)
(74) Vertreter: Von Renesse, Dorothea

(57) **Zusammenfassung**

Beschrieben werden modifizierte Phenolharze, Verfahren zu deren Herstellung, Phenolharzformulierungen, welche die modifizierten Phenolharze enthalten, sowie Verfahren zu deren Herstellung. Ferner werden spezifische Verwendungen entsprechender Phenolharze bzw. Phenolharzformulierungen und die Verwendung von Blockcopolymeren zur Herstellung von Phenolharzen beschrieben.

## Beschreibung

Die vorliegende Erfindung betrifft modifizierte Phenolharze sowie Verfahren zu deren Herstellung. Weiterer Gegenstand der vorliegenden Erfindung sind Phenolharzformulierungen, welche die modifizierten Phenolharze enthalten, sowie Verfahren zu deren Herstellung. Schließlich betrifft die vorliegende Erfindung spezifische Verwendungen entsprechender Phenolharze bzw. Phenolharzformulierungen und die Verwendung von Blockcopolymeren zur Herstellung von Phenolharzen.

Phenolharze sind Kondensationsprodukte von Phenolen mit Aldehyden, insbesondere mit Formaldehyd. Phenolharze gehören zur Familie der Duroplaste. Durch die dreidirüensionale Vernetzung besitzen sie im ausgehärteten Zustand keinen Schmelzpunkt. Oberhalb einer spezifischen Temperaturgrenze beginnen sie, sich zu zersetzen. Phenolharze werden als Bindemittel, Leime oder Rohstoffe zur Herstellung von Formmassen, Elektro- und Wärmeisolierstoffen, Lacken, Reibbelägen, Schleifmitteln, Holzwerkstoffen und Faserformteilen verwendet. Darüber hinaus werden Phenolharze als Gießerei- und Feuerfestbindemittel eingesetzt.

Wesentliche Anwendungsgebiete der mit Phenolharzen hergestellten Produkte umfassen die Elektro-, Bau- und Holzindustrie, den Fahrzeugbau sowie die Luft- und Raumfahrt, da sie sie eine hohe Festigkeit, Steifigkeit und Oberflächenhärte sowie Temperaturbeständigkeit aufweisen. Der niedrige Wärmeausdehnungskoeffizient macht sie formstabil und thermisch belastbar. Weiterhin zeichnen sich Phenolharze durch eine hervorragende Brand- und Flammresistenz sowie durch ein hohes elektrisches und thermisches lsolationsvermögen aus.

In der Phenolharzsynthese reagieren Phenolkomponente und Aldehydkomponente in einer katalytischen Kondensationsreaktion unter Wasserabspaltung zu niedermolekularen Polymeren. Die Wahl des Katalysators ist neben dem Verhältnis von Phenolkomponente und Aldehydkomponente ausschlaggebend für die Art des Phenolharzes. Bei der Synthese von Novolaken werden Säuren als Katalysatoren genutzt. Für die Kondensationsreaktion von Resolen kommen Basen zum Einsatz.

Ein Nachteil an den herkömmlichen Phenolharzsystemen besteht jedoch darin, dass die Phenolharze häufig eine gewisse unerwünschte Sprödigkeit aufweisen, so dass sie nur in einem kleinen Bereich dehnbar sind.

Zur Herabsetzung der Sprödigkeit ist aus der WO 97/17385 Anordnung bekannt, Phenolharze durch den Einbau von Segmenten auf Basis von Flüssigkautschuken zu modifizieren. Zu diesem Zweck werden die Flüssigkautschuke mit Formaldehyd oder Derivaten davon und Phenol oder Derivaten davon während der Phenolharzsynthese zur Reaktion gebracht. Hierdurch erfolgt ein chemischer Einbau der Flüssigkautschuke in das Phenolharzgerüst. Der Einbau des Kautschuks erfolgt dabei im Allgemeinen über eine Einfachbindung jeweils am Anfang- und am Kettenende des Kautschukmoleküls, welche zu diesem Zweck am Anfang und Ende der Kautschukmoleküle funktionelle Gruppen, beispielsweise Carboxygruppen oder Aminogruppen tragen.

Die resultierenden Phenolharze weisen im Allgemeinen eine geringere Sprödigkeit als die entsprechenden unmodifizierten Phenolharze auf, da eine gewisse Flexibilisierung des Phenolharzgerüsts aufgrund der geringeren Netzwerkdichte erreicht wird.

Als verwendbare Flüssigkautschuke sind beispielsweise funktionelle Gruppen enthaltende Polybutadien-, Acrylbutadien- oder Silikonkautschuke sowie Vinylpyridin- oder Acrylsäure-Butadien-Styrol-Polymere bekannt. Als funktionelle Gruppen weisen diese Flüssigkautschuke beispielsweise Hydroxyl-, Carboxyl-, Amino- oder Epoxidgruppen auf.

Nachteilig an dieser Verfahrensweise ist jedoch, dass durch die Modifizierung die chemische und thermische Alterung der Phenolharze verschlechtert werden. Auch kann die Festigkeit des Harzes abnehmen. Insgesamt wird die Verarbeitbarkeit schlechter.

Als Aufgabe der vorliegenden Erfindung ergibt sich somit, Phenolharze mit einer verringerten Sprödigkeit und damit einer erhöhten Dehnbarkeit zur Verfügung zu stellen, bei welchen allerdings die Alterungseigenschaften im Wesentlichen unverändert bleiben.

Gelöst wird diese Aufgabe durch Phenolharze, welche mindestens ein Segment auf Basis eines aromatische Einheiten aufweisenden Kautschuks umfassen.

Erfindungsgemäß wurde erkannt, dass durch den Einbau von aromatischen Segmenten in das Phenolharzgerüst einerseits eine verringerte Sprödigkeit und somit auch eine erhöhte Dehnbarkeit des Phenolharzes zu erreichen ist. Die thermische und chemische Alterungsbeständigkeit bleibt hingegen erhalten.

Das Segment auf Basis von aromatischen Einheiten kann erfinddungsgemäß dadurch in das Grundgerüst integriert werden, dass ein aromatische Einheiten aufweisender Kautschuk, insbesondere ein Flüssigkautschuk, während der Herstellung des Phenolharzes zugegen ist.
An dem aromatischen Kautschuk kommt es während der Phenolharzdarstellung dabei zu einer Umsetzung mit der Aldehydkomponente unter Ausbildung von Methylolgruppen (-CH₂OH). Diese Methyolgruppen können dann an der Kondensation zur Herstellung der Phenol-Aldehyd-Kondensate analog zu dem Phenol selbst teilnehmen. Damit erfolgt der Einbau des Blockcopolymers in das Phenol-Formaldehyd-Kondensat (nämlich über die Methylolgruppen des Kautschuks). Nach der Lehre der WO 97/17385 erfolgt der Einbau demgegenüber über die entsprechenden Hydroxyl-, Carboxyl-, Amino- oder Epoxidgruppen des Kautschuks. Damit ändert sich der strukturelle Aufbau des resultierenden Phenolharzes im Vergleich zum Stand der Technik.

Werden aromatische Einheiten aufweisende Kautschuke während der Phenolharzsynthese als Reaktionspartner neben dem Phenol(derivat) und dem Formaldehyd(derivat) verwendet, wird dem Formaldehyd(derivat) somit als weiteren Vernetzungspartner ein aromatischer Reaktionspartner angeboten. Hierdurch erhöht sich die Vernetzungsdichte gegenüber Phenolharzen gemäß dem Stand der Technik, da nämlich mehrere chemische Bindungen über die aromatische Einheit, insbesondere stabile Methylengruppen, entstehen. Diese Vernetzung führt zu einer modifizierten Morphologie im Vergleich zu den aus der WO 97/17385 A bekannten Phenolharzsystemen. Die resultierende Morphologie weist eine besonders gute chemische und thermische Alterungsbeständigkeit auf. Auch die Beständigkeiten bei der Alterung der vernetzten Systeme unter Feuchtigkeitseinfluss werden deutlich verbessert.

Neben diesen verbesserten Alterungsbeständigkeiten wird überraschenderweise auch eine hervorragende Dehnbarkeit (Flexibilisierung) der Phenolharze erhalten, obwohl dieses aufgrund der größeren Anzahl von Vernetzungspunkten am aromatischen Teil des in das Phenolharzgerüst eingebauten Kautschuks nicht zu erwarten war.

In einer bevorzugten Ausführungsform der vorliegenden Erfindung werden unter dem Begriff der aromatische Einheiten aufweisenden Kautschuke keine Acrylsäure-Butadien-StyrolPolymere verstanden. Diese Polymere werden in WO 97/17385 A genannt; allerdings erfolgt dort der Einbau in das Phenolharzgerüst nicht über Methylolgruppen, welche durch Umsetzung mit der Aldehydkomponente gebildet werden, sondern über funktionelle Gruppen an dem Polymer.

Die für die vorliegende Erfindung geeigneten Kautschuke weisen aromatische Einheiten auf und werden in der Regel durch Umsetzung von Kautschuken mit reaktiven aromatischen Systemen hergestellt.

Mit einem steigenden Anteil an aromatische Einheiten enthaltenden Segmenten in dem Phenolharz kann dessen Elastizität gesteigert werden.

Der Anteil an aromatische Einheiten enthaltenden Segmenten kann - in Abhängigkeit der gewünschten Sprödigkeit bzw. Dehnbarkeit des Phenolharzes - in weiten Bereichen variiert werden. Allerdings ist es bevorzugt, wenn der Anteil an aromatische Einheiten aufweisenden Segmenten in dem Phenolharz, jeweils bezogen auf das Gesamtgewicht des Phenolharzes, 0,5 bis 15 Gew.-%, insbesondere 1 bis 10 Gew.-%, besonders bevorzugt 2 bis 8 Gew.-%, beträgt. Ebenso sind 4 bis 6 Gew.-% möglich.

Das erfindungsgemäße Phenolharz enthält, jeweils bezogen auf das Gesamtgewicht des Phenolharzes, 0,5 bis 15 Gew.-%, insbesondere 1 bis 10 Gew.-%, besonders bevorzugt 2 bis 8 Gew.-% Anteil an Blockpolymer. Der Anteil kann auch 4 bis 6 Gew.-% betragen. Der Anteil an Blockpolymer ist wesentlich für das Erreichen einer gewünschten Zähigkeit unter Beibehaltung einer ausreichenden Verarbeitbarkeit.

Durch die Ausbildung von Segmenten eines aromatische Einheiten aufweisenden Kautschuks in dem erfindungsgemäßen Phenolharz entsteht darüber hinaus ein besonders schlagzähiges Phenolharz.

### Phenolkomponente

Als phenolische Verbindungen für den Aufbau des Phenolharzes können beliebige aromatische Verbindungen verwendet werden, welche eine phenolische Gruppe tragen.

Die chemische Struktur der Phenolverbindungen unterliegt im Allgemeinen keiner besonderen Beschränkung und es können sowohl einkernige als auch mehrkernige Phenole verwendet werden. Die ein- oder mehrkernigen Phenole können wiederum ein- oder mehrwertig sein, dass heißt eine oder mehrere Hydroxylgruppen tragen.

Beispiele geeigneter phenolischer Verbindungen können ausgewählt werden aus der Gruppe, bestehend aus Phenol; mit Alkyl substituierten Derivaten des Phenols, beispielsweise O-, m- oder p-Kresol; höher alkylierten Phenolen; mit Halogen substituierten Phenolen, beispielsweise Chlor- oder Bromphenol; mehrwertigen Phenolen, beispielsweise Resorcin oder Brenzkatechin; phenolischem Melamin; und mehrkernigen Phenolen wie Naphthole, Bisphenol A oder Bisphenol F.

### Aldehydkomponente

Als Aldehydkomponente können in dem Phenolharz alle Verbindungen der allgemeinen Formel R-CHO eingesetzt werden. Entsprechende Aldehyde können ausgewählt werden aus der Gruppe, bestehend aus Formaldehyd, Acetaldehyd, Propionaldehyd, n-Butyraidehyd, iso-Butyraldehyd, Glyoxal und Furfural.

Ein bevorzugter Aldehyd, welcher im Rahmen der vorliegenden Erfindung verwendet werden kann, ist Formaldehyd. Formaldehyd kann dabei in einer Form eingesetzt werden, welche Formaldehyd erst während der eigentlichen Umsetzung oder aber kurz vorher abspaltet. Beispiele hierfür sind Paraformaldehyd oder Trioxan. Eine weitere bevorzugte Zugabeform ist eine wässrige Lösung des Formaldehyds (Formalin).

### Aromatische Einheiten aufweisender Kautschuk

Der Segmentanteil an aromatischem Kautschuk in dem erfindungsgemäßen Phenolharz geht im Allgemeinen auf ein Blockcopolymer zurück, welches während der Synthese der Phenolharze verwendet wird.

Der Segmentanteil an aromatischem Kautschuk sorgt im Rahmen der erfindungsgemäßen Phenolharze für eine gewisse Dehnbarkeit und damit Flexibilisierung des Harzes, ohne gleichzeitig andere Nachteile, insbesondere im Hinblick auf die chemische und thermische Alterung, hervorzurufen.

Der aromatische Einheiten aufweisende Kautschuk kann sowohl für unter alkalisch katalysierter Kondensation erhaltene selbsthärtende Harze als auch für unter saurer katalysierter Kondensation erhaltene Novolake, welche mit typischen Härtungsmitteln, beispielsweise Hexamethylentetramin, gehärtet werden können, eingesetzt werden.

Im Rahmen der vorliegenden Erfindung ist es auch möglich, Mischungen entsprechender aromatische Einheiten aufweisender Kautschuke in Phenolharzen zu verwenden.

Die Blockcopolymere werden im Allgemeinen aus der Umsetzung von reaktiven Flüssigkautschuken (Weichsegment) mit reaktiven aromatischen Systemen (Hartsegment) hergestellt.

### (i) Reaktiver Flüssigkautschuk (Weichsegment)

Das Weichsegment des aromatischen Kautschuks, welcher im Rahmen der vorliegenden Erfindung in das Phenolharzgerüst eingebaut wird, unterliegt keiner besonderen Beschränkung, insoweit er in der Lage ist, mit dem aromatischen System zu reagieren. Hierfür weist der reaktive Kautschuk vorzugsweise mindestens eine, insbesondere mindestens zwei funktionelle Gruppen auf. Der Kautschuk ist vorzugsweise ein flexibles, langkettiges Molekül mittlerer Molmasse, welches reaktive Gruppen zur Umsetzung mit dem aromatischen System aufweist: Die Art der reaktiven Gruppen unterliegt keiner besonderen Beschränkung, soweit die reaktiven Gruppen des Kautschuks in der Lage sind, mit dem aromatischen System zu reagieren.

Die Molmasse des Kautschuks beträgt vorzugsweise 2500 bis 8000 g/mol, besonders bevorzugt 3000 bis 6000 g/mol, insbesondere 3200 bis 4500 g/mol. Erfindungsgemäße Phenolharze mit derartigen Kautschuken sind durch eine möglichst niedrige Viskosität und guten Eigenschaften bei der Schlagzähigkeit gekennzeichnet.

Als Kautschuke können beispielsweise funktionalisierte Homopolymere ausgewählt aus der Gruppe bestehend aus Homopolymeren des Butadiens, Copolymere des Butadiens mit Acrylnitril und Terpolymere aus Butadien, Acrylnitril und Acrylsäure, verwendet werden. Diese Kautschuke weisen als funktionalisierte Endgruppen Carboxy-, Amino- oder Methacrylatgruppen auf. Entsprechende Kautschuke sind beispielsweise von der Firma Emerald Performance Materials unter der Markenbezeichnung Hypro^{™} RLP (früher Hycar^{®} RLP) kommerziell erhältlich. Beispiele hierfür sind die Typen Hypro^{™} CTBN 1300x8, Hypro^{™} ATBN 1300x45 und Hypro^{™} VTBNX 1300x33.

Weitere Beispiele für verwendbare Kautschuke sind carboxyfunktionelle Polybutadiene. Geeignete kommerziell erhältliche Kautschuke sind beispielsweise Poly bd^{®} 45 CT und Poly bd^{®} R45HTLO (mit Hydroxylgruppen funktionalisierte Butadiene) jeweils von der Firma Sartomer. Auch die epoxy- oder acrylatfunktionellen Flüssigpolymere der Poly bd^{®}-Produktreihe sind einsetzbar.

Weitere Beispiele für verwendbare Kautschuke sind carboxylierte Copolymere aus Acrylnitril und Butadien, die von der Firma Zeon Chemicals hergestellt werden und unter der Bezeichnung Nipol^{®} vertrieben werden. Ein Beispiel ist das Nipol^{®} 1072.

Weitere Beispiele, welche ein geeignetes Weichsegment in das resultierende Phenolharz einbinden, sind hydroxylfunktionelle Kautschuke, beispielsweise Kautschuke der Markenbezeichnung Krasol^{®} LBH 2000, welche kommerziell erhältlich sind von der Firma Sartomer. Dabei handelt es sich um Butadien-Homopolymere. Des Weiteren sind isocyanatfunktionelle Kautschuke, beispielsweise Kautschuke der Markenbezeichnungen Krasol^{®} LBD 2000, geeignet.

Mit Maleinsäure gepfropfte flüssige Polybutadiene eignen sich ebenfalls als erfindungsgemäß zu verwendende Flüssigkautschuke. Ein Beispiel für diese Klasse der Flüssigkautschuke ist Ricon^{®} 130MA13 der Firma Sartomer.

### (ii) Aromatisches System (Hartsegment)

Das Hartsegment des erfindungsgemäß verwendeten Blockcopolymers unterliegt keiner besonderen Beschränkung, soweit es mindestens eine, vorzugsweise mindestens zwei reaktive Gruppen aufweist, weiche mit den reaktiven Gruppen des Kautschuks reagieren können, und aromatische Anteile aufweist. Über den aromatischen Anteil des Hartsegments wird der Einbau des Blockcopolymers in das Phenolharz ermöglicht, indem die Aldehydkomponente während der Phenolharzsynthese nicht nur mit dem Phenol, sondern auch mit dem aromatischen Teil des Blockcopolymers unter Ausbildung von Methylolgruppen reagiert. Diese Methylolgruppen nehmen dann an der Kondensationsreaktion zur Herstellung des Phenolharzes in Analogie zur Phenolkomponente teil. Damit kommt es letztendlich zu einem Einbau des Blockcopolymers in das Phenolharz.

Das aromatische System des Blockcopolymers kann beispielsweise ausgewählt werden aus der Gruppe bestehend aus den Kondensationsprodukten von Epichlorhydrin und Bisphenol, epoxidierten Novolaken, DGEBA-Festharzen, Kresol-Novolak-Epoxidharzen, epoxidierten Cashewnussschalenölen, Tolyloxymethyloxiran und Phenalkaminen sowie aromatischen Säureanhydriden (z.B. Phthalsäureanhydrid, Trimellitsäureanhydrid, 3,4,3',4'-Benzophenontetracarbonsäureanhydrid, Ethylenglycolbistrimellitat und Glyceroltristrimellitat).

Die in dem erfindungsgemäß zu verwendenden Blockcopolymer vorhandenen Hartsegmente können somit beispielsweise aromatische Epoxidharze sein. Geeignet sind hierfür beispielsweise die Kondensationsprodukte von Epichlorhydrin an Bisphenolsystemen, beispielsweise an Bisphenol A und Bisphenol F. Kommerziell erhältliche Systeme sind beispielsweise ein Bisglycidylether von Bisphenol A (z.B. Araldite^{®} GY 250 von der Firma Huntsman), ein Bisglycidylether von Bisphenol F (z.B. Epikote^{®} 862 von der Firma Hexion) oder epoxidierte Novolake (z.B. DEN^{®} 431 von der Firma Dow Chemicals).

Auch höhermolekulare Derivate wie DGEBA-Festharze (z.B. Epikote^{®} 1001 von der Firma Hexion) oder auch Kresol-Novolak-Epoxidharze (z.B. Araldite^{®} ECN 9699 von der Firma Huntsman) können eingesetzt werden. Auch andere aromatische Systeme wie epoxidiertes Cashewnussschalenöl (z.B. Cardolite^{®} NC 513 von der Firma Cardanol) oder Phenalkamine sind geeignet.

Weitere Verbindungen, die als Hartsegment in den Blockcopolymeren verwendet werden können, sind Tolyloxymethyloxiran und aromatische Säureanhydride, beispielsweise Phthalsäureanhydrid, Trimellitsäureanhydrid, 3,4,3',4'-Benzophenontetracarbonsäureanhydrid, Ethylenglycolbistrimellitat oder Glyceroltristrimellitat.

### (iii) Herstellung des erfindungsgemäß zu verwendenden Blockcopolymers

Die Herstellung des erfindungsgemäß zu verwendenden Blockcopolymers kann durch die Umsetzung des Kautschuks mit dem aromatischen System erfolgen. Dazu kann es erforderlich sein, dass die beiden Komponente jeweils reaktive funktionelle Gruppen aufweisen, so dass es bei der Umsetzung zu einer Reaktion dieser funktionellen Gruppen unter Ausbildung des erfindungsgemäß zu verwendenden Blockcopolymers kommt.

Die Umsetzung erfolgt dabei unter Bedingungen, die auf die jeweiligen verwendeten Systeme abgestimmt sind. Die Reaktionsbedingungen hängen in diesem Fall somit von den jeweiligen Reaktionskomponenten ab. In der Regel findet die Umsetzung bei Temperaturen in einem Bereich von 60 bis 200 °C statt. Die Umsetzung kann dabei mit und ohne Zusatz eines Katalysators durchgeführt werden.

Wenn im Rahmen der Umsetzung Katalysatoren verwendet werden, so sind Phosphorverbindungen, beispielsweise Triphenylphosphin, und tertiäre Amine, beispielsweise Benzyldimethylamin, möglich.

Die Verwendung eines Katalysators ist insbesondere dann bevorzugt, wenn das Blockcopolymer nicht unmittelbar in der sich anschließenden Phenolharzsynthese eingesetzt wird, da die Verwendung von Katalysatoren während der Herstellung zu einer geringen Lagerstabilität der resultierenden Blockcopolymere führen kann.

### Herstellung des erfindungsgemäßen Phenolharzes

Der die aromatischen Einheiten aufweisende Kautschuk kann in die Vorlage für die Phenolharzherstellung eingebracht und dann mit der Phenolkomponente und der Aldehydkomponente umgesetzt werden.

Die Herstellung der erfindungsgemäßen Phenolharze kann wie aus dem Stand der Technik bekannt unter Anwendung saurer (Novolake) oder basischer Katalyse (Resole) durchgeführt werden. Dieses erfolgt durch eine dem Fachmann hinlänglich literaturbekannte Kondensationsreaktion bei erhöhter Temperatur, beispielsweise unter Rückflusstemperatur. In Abhängigkeit der Art des Katalysators, dessen Zugabemenge sowie der angewendeten Temperaturen entstehen unterschiedliche Phenolharze. Die Durchführung der entsprechenden Kondensationsreaktionen ist dem Fachmann an sich bekannt; gemäß dem Stand der Technik kann der Fachmann bei der Herstellung der erfindungsgemäßen Phenolharze die Reihenfolge der Zugabe der Reaktanden, die Temperaturführung sowie die Anwendung von zwischengeschalteten Destillationsschritten variieren.

Dabei ist es bevorzugt, dass zunächst die Phenolkomponente und der aromatische Einheiten aufweisende Kautschuk vorgelegt werden und anschießend die Aldehydkomponente eingebracht wird. Die Aldehydkomponente kann dabei langsam in die Vorlage eingespeist werden, die mit der Phenolkomponente und dem aromatische Einheiten aufweisenden Kautschuk befüllt ist, oder aber langsam durch eine entsprechende.Vorläuferverbindung freigesetzt werden.

In einer besonders bevorzugten Ausführungsform werden die Erstellung des aromatische Einheiten aufweisenden Kautschuks sowie die Herstellung des erfindungsgemäßen Phenolharzes in einer Eintopfreaktion durchgeführt. Das heißt, dass der zunächst hergestellte aromatische Einheiten aufweisende Kautschuk unmittelbar, also im Wesentlichen ohne Aufarbeitung, Abtrennung oder Reinigung, zur Herstellung des erfindungsgemäßen Phenolharzes verwendet wird. Zu diesem Zweck wird er nach der Herstellung des Kautschuks mit der Phenolkomponente versetzt, und dann wird die Aldehydkomponente zugegeben bzw. aus einer Vorläuferverbindung freigesetzt.

Unter Verwendung des erfindungsgemäß vorgesehenen aromatische Einheiten aufweisenden Kautschuks ist es möglich, Resole und Novolake herzustellen.

Wenn Novolake hergestellt werden sollen, können die Phenolkomponente, der aromatische Einheiten aufweisende Kautschuk und die Aldehydkomponente unter Einwirkung von Säure, insbesondere organischer Säuren, beispielsweise Oxalsäure, umgesetzt werden.

Wenn Resole hergestellt werden sollen, können die Phenolkomponente, der aromatische Einheiten aufweisende Kautschuk und die Aldehydkomponente unter der Einwirkung von Basen, insbesondere organischen Basen, umgesetzt werden. In einer bevorzugten Ausführungsform beträgt der Anteil des aromatische Einheiten aufweisenden Kautschuks bezogen auf die Phenolkomponente oder die Aldehydkomponente 0,5 - 15 %, 1 - 10 %; oder 2-8%.

Für die Phenolharzherstellung kann ein Lösemittel verwendet werden, welches ausgewählt ist aus der Gruppe bestehend aus Wasser oder Alkohole, z.B. Methanol, oder Gemischen davon.

Im Rahmen der vorliegenden Erfindung kann das aus dieser Umsetzung resultierende Harz anschließend destilliert werden, um das Lösemittel, phenolische Anteile, Anteile, welche auf die Formaldehydkomponente zurückgehen, sowie gegebenenfalls weitere leichtflüchtige Komponenten aus dem Reaktionssystem zumindest teilweise oder auch vollständig zu entfernen. Diese Entfernung von flüchtigen Bestandteilen ist in Abhängigkeit des gewünschten Anwendungsgebiets der Phenolharze jedoch nicht zwingend erforderlich.

Durch die Verwendung eines Blockcopolymers während der Herstellung des erfindungsgemäßen Phenolharzes erhält man ein transparentes und homogenes Harzsystem, das zur Weiterverarbeitung in einer Vielzahl von Verfahren und Anwendungen geeignet ist.

Die Charakterisierung der erfindungsgemäßen Phenolharze kann üblicherweise durch die Messung der Viskosität, des Festkörpergehalts, durch den Gehalt an freiem Formaldehyd und die B-Zeit, dessen Bestimmung mittels einer Heizplatte durchgeführt wird, erfolgen. Die B-Zeit gibt die Zeit bis zur vollständigen Vernetzung des Harzes an.

Die resultierenden Phenolharze können gegebenenfalls weiteren Modifikationen unterworfen werden. So ist es beispielsweise möglich, die resultierenden Phenolharze mit einem Lösemittel, beispielsweise Methylethylketon (MEK) zu versetzen. Hierdurch können sich bestimmte Anwendungsgebiete für die erfindungsgemäßen Phenolharze erschließen.

Ein weiterer Gegenstand der vorliegenden Erfindung sind die nach diesem Verfahren erhältlichen Phenolharze.

### Phenolharzformulierung

Weiterer Gegenstand der vorliegenden Erfindung sind Phenolharzformulierungen, welche die erfindungsgemäßen Phenolharze enthalten.

Weitere Bestandteile dieser Phenolharzformulierung können andere, beliebige Phenolharze sowie weitere Zusatzstoffe oder Additive sein.

Auch können die erfindungsgemäßen Phenolharze zur Modifikation anderer Harzsysteme außer Phenolharzen verwendet werden. Zu diesem Zweck werden die erfindungsgemäßen Phenolharze mit den anderen Harzsystemen, bei welchen es sich beispielsweise um Melaminharze, Harnstoffharze, Polyurethanharze, Bismaleinimidharze und Cyanuratharze handeln kann, formuliert.

Weiterer Gegenstand der vorliegenden Erfindung sind daher auch Melaminharze, Harnstoffharze, Polyurethanharze, Bismaleinimidharze und Cyanuratharze, welche die erfindungsgemäßen Phenolharze, gegebenenfalls in der Form einer Formulierung, enthalten.

Durch Abstimmung der einzelnen Bestandteile der Phenolharzformulierungen, insbesondere durch die Abmischung erfindungsgemäßer Phenolharze mit Standardharzen, kann die Zähigkeit, Sprödigkeit und Flexibilität der entsprechenden Phenolharzformulierungen gesteuert werden.

### Verwendung der erfindungsgemäßen Phenolharze bzw. Phenolharzformulierungen

Weiterer Gegenstand der vorliegenden Erfindung ist die Verwendung der erfindungsgemäßen Phenolharze. Im Allgemeinen ist die Verwendung der erfindungsgemäßen Phenolharze überall dort gefragt, wo konventionelle Phenolharzsysteme, also Phenolharze, welche ohne Verwendung des aromatische Einheiten aufweisenden Kautschuks hergestellt werden, hinsichtlich Zähigkeit und Flexibilität an ihre Grenzen stoßen.

Die Anwendungsgebiete der erfindungsgemäßen Phenolharze bzw. Phenolharzformulierungen liegen beispielsweise im Bereich der faserverstärkten Laminate, z.B. zur Herstellung von Paneelen für den Flugzeugbau, und für die Innenauskleidung von Schienenfahrzeugen.

Weitere Verwendungszwecke sind Papieranwendungen, beispielsweise bei der Herstellung von Hartpapieren und Filtern, sowie Holzanwendungen, beispielsweise bei der Herstellung von Schichtpressstoffen.

Weitere Anwendungsgebiete der erfindungsgemäßen Phenolharze oder Phenolharzformulierungen sind die Herstellung von Reib- und Schleifbelägen, von Brems-und Kupplungsbelägen und von Schleifpapier.

Auch für Anwendungen im Bereich der Elektronik und Elektrotechnik, im Gebäusebau für Haushaltsgeräte sowie Anwendungen im Bereich der Gießereiindustrie können die erfindungsgemäßen Phenolharze sowie Phenolharzformulierungen eingesetzt werden. Damit ist es möglich, die jeweiligen Eigenschaftsprofile des Endprodukts deutlich zu verbessern.

Weiterer Gegenstand der vorliegenden Erfindung ist darüber hinaus die Verwendung von aromatische Einheiten aufweisenden Kautschuk zur Herstellung von Phenolharzen.

Die vorliegende Erfindung wird anhand der nachfolgenden Beispiele näher erläutert.

### Beispiele:

### Herstellung eines erfindungsgemäß zu verwendenden Blockcopolymers (Beispiel 1a)

8 kg eines entsprechenden reaktiven Flüssigkautschuks, Hypro CTBN 1300x8 (Hersteller Emerald Performance Materials, U.S.A), werden in einem 25 kg Reaktionsgefäß vorgelegt. Aufgrund der hohen Viskosität des Flüssigkautschuks wird dieser zur besseren Dosierung auf 50 bis 100 °C vorgewärmt. Dann werden 2 kg eines handelsüblichen Bisphenol-A-Diglycidylethers, z.B. Epikote® 828 (Hersteller Hexion, U.S.A.) oder Araldite^{®} GY 250 (Hersteller Huntsman, Schweiz) zugegeben. Die Umsetzung zum Copolymer wird bei Normaldruck und 140 °C während 2 Stunden durchgeführt.

Man erhält ein hochviskoses Blockcoplymer mit einer Säurezahl < 1; d.h. die vorher im Reaktivkautschuk vorhandenen Carboxygruppen haben mit Epoxidgruppen reagiert. Auch das Epoxidäquivalent von 1600 bestätigt dies. Die Viskosität beträgt 3200 Pas (bei 25 °C). Gemäß dieser Verfahrensweise wurden folgende weiteren Blockcopoymere hergestellt:

### Beispiel 1b:

9 kg Hypro^{™} CTBN 1300x8, 1 kg Araldite^{®} GY 250
EEW 7200, 8900 Pas

### Beispiel 1c:

7 kg Hypro^{™} CTBN 1300x8, 3 kg Araldite^{®} GY
250 EEW 800, 1050 Pas

### Beispiel 1d:

8 kg Hypro^{™} CTBN 1300x8, 2 kg Cardolite^{®} NX 476
EEW 14159, 140 Pas

### Beispiel 1e:

8 kg Hypro^{™} CTBN 1300x8, 2 kg Polypoe^{®} R6
EEW 1500, 64 Pas

### Beispiel 1f:

8 kg Hypro^{™} CTB 2000x162, 2 kg Araldite^{®} GY 250
EEW 1550, 5400 Pas

### Beispiel 1g:

8 kg Hypro^{™} CTBN 1300 x31, 2 kg Araldite^{®} GY 250
EEW 1600, 2600 Pas

### Herstellung mit Blockcopolymeren modifizierter Phenolharze (Beispiel 2a):

10 kg Phenol, 14,66 kg Formalin (37 %ig), 3,746 kg Wasser und 0,5 kg des Blockcopolymeren aus Beispiel 1a werden in einem 25 kg Reaktionsgefäß vorgelegt. Bei 50 °C wird 60 Minuten lang homogenisiert. Dann werden 0,38 kg 50 %ige Natronlauge zugegeben und die Temperatur wird auf 80 bis 85 °C erhöht.

120 Minuten lang wird die Kondensationsreaktion durchgeführt. Anschließend wird bei einem Vakuum von 50 - 55 mbar und einer Temperatur von 50 °C Wasser bis zum gewünschten Festgehalt abdestilliert.

### Vergleichsbeispiel 2b

Zu Vergleichszwecken wird analog zu Beispiel 2a) ein Phenolharz hergestellt, welches jedoch kein Blockcopolymer enthält. Es wird in den Anwendungsbeispielen als Kontrolle bezeichnet.

### Einsatz der modifizierten Phenolharze zur Papierverstärkung

Natroncraftpapier mit einem Flächengewicht von 80 g/m² wird zum einen mit der Kontrolle nach Beispiel 3, zum anderen mit dem modifizierten Harzsystem nach Beispiel 2 imprägniert. Die Teststreifen werden im Trockenschrank bei 130 °C völlig ausgehärtet.

Eine Prüfung der Bruchlast ergibt für die Kontrolle einen Mittelwert von 139,5 N und für das modifizierte System 159,3 N. Das heißt, dass das mit den Blockcopolymeren modifizierte Phenolharz ist deutlich zähelastischer.

## Patentansprüche

1. Phenolharz, umfassend mindestens ein Segment auf Basis eines aromatische Einheiten aufweisenden Kautschuks, insbesondere eines Flüssigkautschuks.

2. Phenolharz nach Anspruch 1, **dadurch gekennzeichnet, dass** der Anteil an aromatische Einheiten enthaltenden Segmenten in dem Phenolharz 0,5 bis 15 Gew.-%, bezogen auf das Phenolharz, beträgt.

3. Phenolharz nach Anspruch 1 oder 2 mit Phenolharz Kautschuksegmenten, welche durch Umsetzung eines Kautschuks mit einem aromatischen System erhältlich sind.

4. Phenolharz nach Anspruch 3, **dadurch gekennzeichnet, dass** der Kautschuk ausgewählt ist aus der Gruppe bestehend aus Homopolymeren des Butadiens; Copolymeren des Butadiens mit Acrylnitril; carboxyfunktionelle, aminfunktionelle oder methacrylatfunktionelle Homopolymeren des Butadiens, carboxyfunktionellen, aminfunktionellen oder methacrylatfunktionellen Copolymeren des Butadiens mit Acrylnitril; carboxyfunktionellen oder methacrylatfunktionellen Terpolymeren aus Butadien, Acrylnitril und Acrylsäure; carboxyfunktionelle, epoxyfunktionelle, hydroxyfunktionelle sowie acrylatfunktionelle Polybutadiene; isocyanatfunktionelle Flüssigkautschuke und mit Maleinsäure gepfropfte Polybutadiene.

5. Phenolharz nach Anspruch 3 oder 4, **dadurch gekennzeichnet, dass** das aromatische System ausgewählt ist aus der Gruppe bestehend aus den Kondensationsprodukten von Epichlorhydrin und Bisphenol, epoxidierten Novolaken, DGEBA-Festharzen, Kresol-Novolak-Epoxidharzen, epoxidierten Cashewnussschalenölen, Tolyloxymethyloxiran und Phenalkaminen, aromatischen Säureanydriden.

6. Verfahren zur Herstellung eines Phenolharzes, **gekennzeichnet durch** die Umsetzung einer Phenolkomponente mit einer Aldehydkomponente in Gegenwart einer aromatische Einheiten aufweisenden Kautschuks.

7. Verfahren nach Anspruch 6, **dadurch gekennzeichnet, dass** die Phenolkomponente ausgewählt ist aus der Gruppe bestehend aus Phenol; mit Alkyl substituierten Derivaten des Phenols, beispielsweise o-, m- oder p-Kresol; höher alkylierten Phenolen; mit Halogen substituierten Phenolen, beispielsweise Chlor- oder Bromphenol; mehrwertigen Phenolen, beispielsweise Resorcin oder Brenzkatechin; phenolischem Melamin; und mehrkernigen Phenolen wie Naphthole, Bisphenol A oder Bisphenol F.

8. Verfahren nach Anspruch 6 oder 7, **dadurch gekennzeichnet, dass** die Aldehydkomponente ausgewählt werden aus der Gruppe bestehend aus Formaldehyd, Acetaldehyd, Propionaldehyd, n-Butyraldehyd, iso-Butyraldehyd, Glyoxal und Furfural.

9. Phenolharz, erhältlich gemäß einem der Verfahren nach einem der Ansprüche 6 bis 8.

10. Phenolharzformulierung, enthaltend ein Phenolharz gemäß einem der Ansprüche 1 bis 5 oder 9.

11. Herstellung einer Phenolharzformulierung gemäß Anspruch 10 durch Mischen eines Phenolharzes gemäß einem der Ansprüche 1 bis 5 mit Additiven und/oder anderen anderen Harzen, ausgewählt aus der Gruppe, bestehend aus Phenolharzen, Melaminharzen, Harnstoffharzen, Polyurethanharzen, Bismaleinimidharzen und Cyanuratharzen.

12. Verwendung eines aromatische Einheiten aufweisenden Kautschuks zur Herstellung eines Phenolharzes.

13. Verwendung eines Phenolharzes gemäß einem der Ansprüche 1 bis 5 oder einer Phenolharzformulierung gemäß Anspruch 10 im Bereich der faserverstärkten Laminate, insbesondere zur Herstellung von Paneelen für den Flugzeugbau und für die Innenauskleidung von Schienenfahrzeugen, im Bereich der Papieranwendungen, insbesondere bei der Herstellung von Hartpapieren und Filtern, im Bereich der Holzanwendungen, insbesondere bei der Herstellung von Schichtpressstoffen, bei der Herstellung von Reib- und Schleifbelägen, Brems- und Kupplungsbelägen und Schleifpapier, im Bereich der Elektronik und Elektrotechnik, im Gebäudebau für Haushaltsgeräte und im Bereich der Gießereiindustrie.
